Europäisches Patentamt

**European Patent Office**

Office européen des brevets

(11) Numéro de publication: **0 107 600**
A1

# (12) DEMANDE DE BREVET EUROPEEN

(21) Numéro de dépôt: 83420166.7

(22) Date de dépôt: 18.10.83

(51) Int. Cl.³: **B 23 Q 1/02,** B 23 Q 7/14,
B 23 Q 1/16

(30) Priorité: 25.10.82 FR 8218449

(43) Date de publication de la demande: 02.05.84
Bulletin 84/18

(84) Etats contractants désignés: **AT BE CH DE GB IT LI LU
NL SE**

(71) Demandeur: **ETABLISSEMENTS MONTABERT,
203, route de Grenoble, F-69800 Saint-Priest Rhône (FR)**

(72) Inventeur: **Montabert, Roger, 57, avenue des Frères
Lumière, F-69008 Lyon (FR)**

(74) Mandataire: **Maureau, Philippe, Cabinet Germain &
Maureau Le Britannia - Tour C 20, bld Eugène Déruelle,
F-69392 Lyon Cédex 03 (FR)**

(54) **Plateau diviseur destiné à assurer la tenue d'une pièce lors de son usinage.**

(57)   Ce plateau diviseur possède une ouverture (7) centrale et
axiale permettant le passage de la pièce (9) à usiner et la tenue
de celle-ci, l'épaisseur du plateau diviseur et du bâti dans lequel
il est monté étant faible vis-à-vis du diamètre de son ouverture.
  Application à l'usinage de pièces de longuer importante.

EP 0 107 600 A1

1

## "PLATEAU DIVISEUR DESTINE A ASSURER LA TENUE D'UNE PIECE LORS DE SON USINAGE"

La présente invention a pour objet un plateau diviseur destiné à assurer la tenue d'une pièce lors de son usinage.

Un plateau diviseur comprend un bâti fixe à l'intérieur duquel est monté pivotant un plateau dont la position angulaire vis-à-vis du bâti peut être réglée avec précision, le plateau étant destiné à la fixation de la pièce à positionner.

Les plateaux diviseurs sont utilisés pour assurer la présentation dans une position angulaire très précise d'une pièce par rapport à l'axe de celle-ci. Tel est notamment le cas lorsqu'il s'agit de procéder à un usinage avec précision de pièces métalliques.

Néanmoins, comme l'indique le terme "plateau", celui-ci est plein et la pièce à usiner est fixée sur l'une de ses faces. Il en résulte que les pièces longues offrent un porte-à-faux important qui nuit à la précision de l'usinage. En outre, habituellement, chaque plateau diviseur est monté de manière fixe sur son support, tel qu'une table d'usinage. Ce montage fixe est dû notamment au caractère non amovible de la liaison entre le moteur d'entraînement du plateau et le système d'alimentation et de commande de celui-ci. Ce système de liaison électrique, hydraulique et/ou pneumatique, se présente sous la forme d'un faisceau de câbles et de conduits, qui constitue également une gêne pour les opérations d'usinage.

Pour réaliser une série d'usinages dans une pièce, il est donc nécessaire d'effectuer des opérations à des postes de travail différents, avec les montages, démontages, et transferts qui sont imposés pour passer d'un poste à l'autre.

La présente invention vise à remédier à ces inconvénients :

A cet effet, le plateau diviseur qu'elle concerne possède une ouverture centrale et axiale permettant le passage de la pièce à usiner et la tenue de celle-ci, l'épaisseur du plateau diviseur et du bâti dans lequel il est monté étant faible vis-à-vis du diamètre de son ouverture.

Selon une forme d'exécution de l'invention, le diamètre de l'ouverture du plateau est sensiblement égal au triple de l'épaisseur de celui-ci.

A titre d'exemple, pour l'usinage de pièces métalliques importantes, l'ouverture centrale du plateau peut être choisie avec un diamètre de l'ordre de 380 mm, tandis que l'épaisseur de celui-ci est de l'ordre de 125 mm.

L'ouverture centrale du plateau permet la traversée de celui-ci par des pièces de grandes longueurs. Il en résulte un centrage de la pièce par rapport au plateau, ce qui permet de diminuer les portes-à-faux dûs au poids de celle-ci et à la poussée des outils, assurant un meilleur centrage par rapport à l'axe du diviseur et permettant d'augmenter la précision de l'usinage.

Il est ainsi possible d'usiner les deux faces en bout d'une pièce, ainsi que de réaliser des usinages radiaux, axiaux ou obliques sur pratiquement toute la longueur de celle-ci.

Avantageusement, le plateau porte une pièce en forme de berceau qui, le traversant, est ouverte vers le haut et sert au support de la pièce à usiner.

Cette augmentation de capacité d'usinage permet de réduire le nombre de manipulations de la pièce à usiner en limitant le nombre des centres d'usinage à utiliser pour obtenir la pièce finie.

Dans la mesure où il s'agit de pièces courtes et où l'on ne doit pas accéder aux deux faces de celles-ci, il est possible de monter deux pièces identiques ou deux pièces différentes de part et d'autre du plateau, et de procéder successivement à l'usinage de ces deux pièces sur le même centre.

Avantageusement, le diviseur est monté à demeure sur une palette de centre d'usinage, équipée de moyens de verrouillage sur la table du centre d'usinage.

Ce diviseur peut donc être changé par le changeur de palettes si celui-ci équipe le centre d'usinage, chargé sur un carroussel pour des pièces semblables ou différentes et, éventuellement, être évacué automatiquement par tout système, par exemple de type chariot filoguidé.

Selon une caractéristique intéressante de l'invention, le moteur assurant le positionnement angulaire du plateau diviseur et les moyens de commande de ce positionnement, est solidaire non pas du plateau diviseur, mais du centre d'usinage, des moyens de liaison mécanique étant prévus entre la sortie du moteur et le plateau diviseur, et des moyens de déplacement rapide étant prévus, susceptibles d'assurer le transfert de la table du centre d'usinage entre la position d'usinage et la position d'accouplement du plateau diviseur avec le moteur, et inversement.

3

Selon une possibilité, le plateau diviseur est actionné par un moteur pas à pas installé dans l'enceinte de la machine d'usinage et relié par une logique électronique à l'armoire de commande numérique du centre d'usinage.

Entre chaque opération d'usinage nécessitant un changement de position angulaire du plateau, la table d'usinage est déplacée jusqu'au moteur pour réaliser l'accouplement de celui-ci avec le plateau diviseur, après quoi sont réalisés le positionnement angulaire souhaité du plateau, puis le retour de la table en position de travail.

Du fait qu'aucune arrivée d'énergie (air, huile, électricité) n'est solidaire du plateau diviseur, rien ne retient celui-ci sur une machine propre.

Il est donc possible de fixer une pièce à usiner sur un plateau diviseur, puis de déplacer l'ensemble palette-plateau diviseur et pièce à usiner d'un centre d'usinage à l'autre, si la complexité des usinages où du nombre d'outils l'exigent.

De toute façon, l'invention sera bien comprise à l'aide de la description qui suit en référence au dessin schématique annexé représentant, à titre d'exemple non limitatif, une forme d'exécution de ce plateau diviseur :

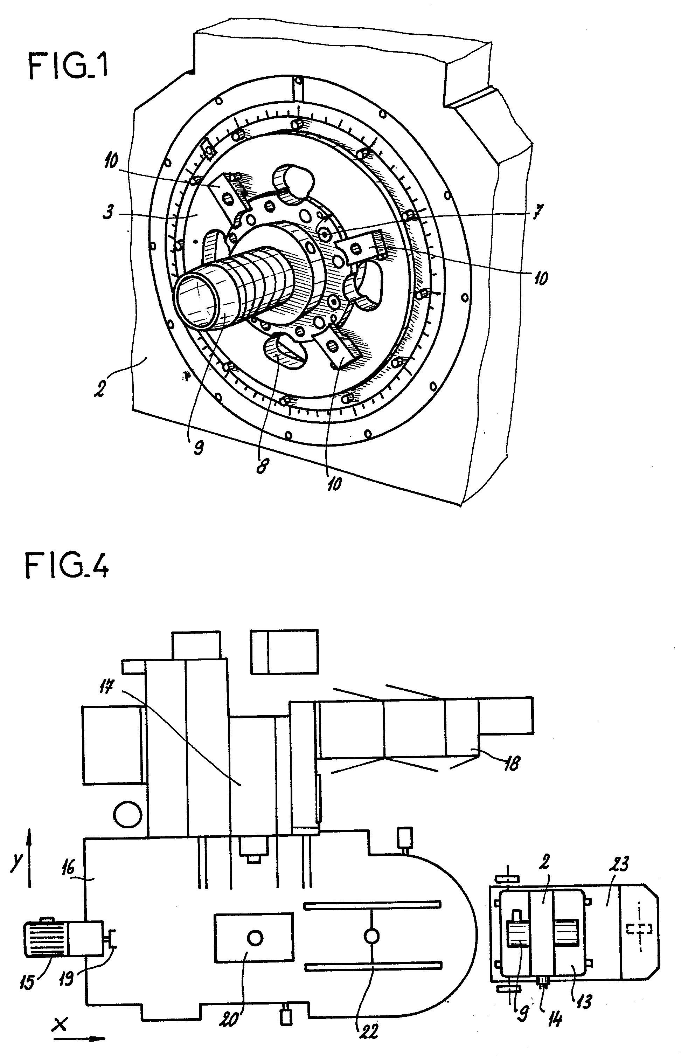

Figure 1 est une vue en perspective du plateau diviseur proprement dit sur lequel est fixée une pièce en cours d'usinage ;

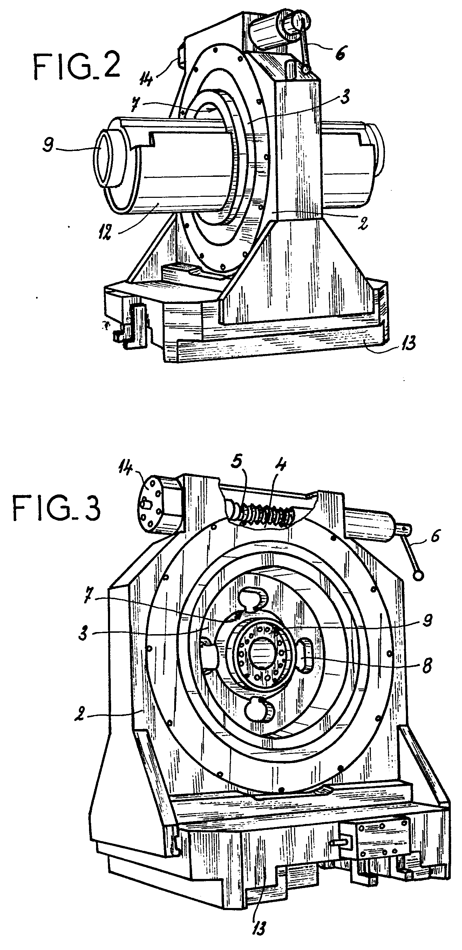

Figure 2 est une vue en perspective de ce plateau diviseur monté sur son support ;

Figure 3 est une vue en perspective de ce plateau diviseur auquel est fixée une autre pièce ;

Figures 4 à 8 sont cinq vues correspondant à cinq phases, respectivement, d'amenée du plateau diviseur à un centre d'usinage, d'usinage et d'évacuation du plateau diviseur hors du centre d'usinage.

Le plateau diviseur représenté au dessin comprend un bâti (2) de forme générale parallélépipédique, disposé verticalement. A l'intérieur de ce bâti est montée la partie pivotante (3) du diviseur, dont le bord périphérique forme une roue dentée (4) engrenant avec une vis horizontale (5) disposée en position haute. L'ensemble roue-vis est de grande précision, la roue creuse étant réalisée en bronze, la vis étant en acier traité, et la lubrification étant obtenue par barbotage. Il est possible de compenser l'usure de l'ensemble, par déplacement axial de la vis, qui

4

possède des flancs à épaisseur croissante. Le roue est taillée et rectifiée en place sur son support définitif qui équipera le diviseur.

Compte tenu de la réduction de 1/90, l'ensemble est irréversible. Néanmoins, un dispositif de freinage entre en jeu dès que le diviseur n'est plus en position de réglage. Ce système de freinage peut être parfait par un système de verrouillage à levier (6).

Comme montré au dessin, le plateau (3) présente une large ouverture centrale (7). A titre d'exemple, l'ouverture centrale (7) peut être de l'ordre de 380 mm, et l'épaisseur du bâti (2) de l'ordre de 125 mm.

En fonction des opérations à réaliser, le plateau (3) peut présenter des évidements (8) qui, débouchant dans l'ouverture centrale (7), facilitent l'usinage de pièces.

De façon traditionnelle, les pièces à usiner (9) sont tenues fermement en place par des doigts radiaux (10).

Dans la mesure où la pièce (9) à usiner possède une certaine longueur, elle fait saillie de part et d'autre du plateau du diviseur, ce qui, d'une part, permet un centrage de la pièce limitant les portes-à-faux et améliorant la précision de l'usinage, et d'autre part, permet l'accès aux deux faces en bout en vue d'un éventuel usinage de celles-ci.

Dans la mesure où la pièce (9) à usiner est très longue, quoiqu'-elle traverse le plateau diviseur, il est intéressant de limiter les portes-à-faux en utilisant une pièce (12) en forme de berceau ouverte vers le haut.

Comme montré au dessin, le plateau diviseur selon l'invention est monté à demeure sur une palette (13) de centre d'usinage.

En outre, ce plateau diviseur n'est pas solidaire de son moteur d'entraînement, ni des moyens de commande de celui-ci en vue du positionnement précis du plateau.

Conformément à un autre aspect de l'invention, à l'une des extrémités de la vis (5) est disposée une prise mécanique (14) d'accouplement de la vis avec un moteur (15).

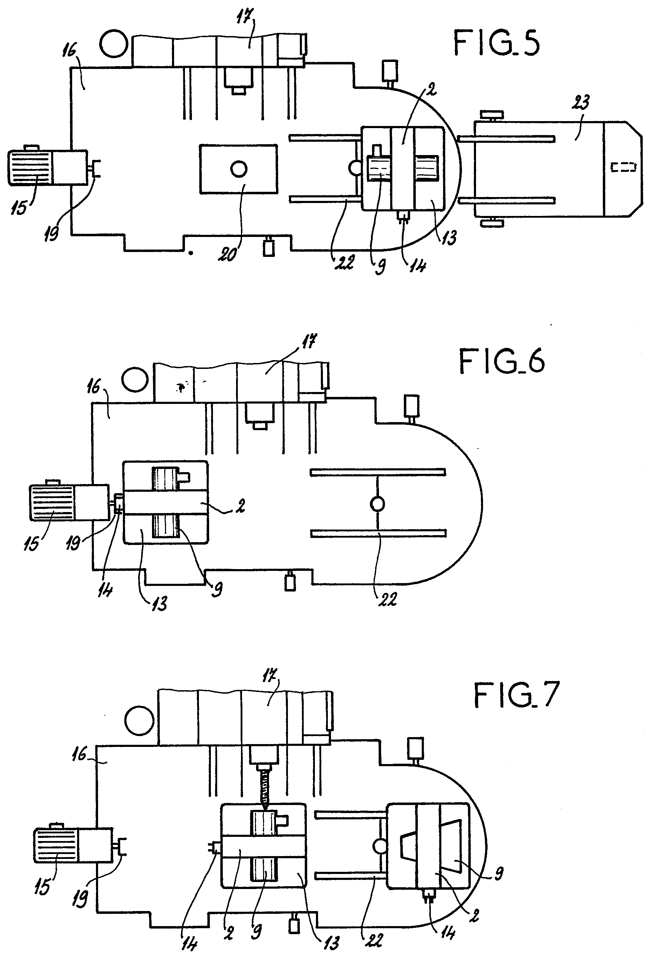

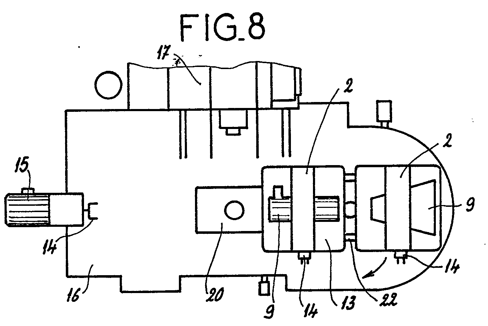

Dans la forme d'exécution représentée aux figures 4 à 8, le moteur (15) est solidaire de l'enceinte (16) d'une machine d'usinage (17) et relié par une logique électronique à l'armoire de commande numérique (18) du centre.

Comme montré au dessin, le moteur (15) présente une prise (19) d'accouplement avec la prise (14) montée en bout de la vis (5).

5

Le centre d'usinage représenté au dessin comporte, de façon connue, une table de travail (20) et un dispositif tournant (22), de transfert de palettes.

D'un point de vue pratique, la cinématique pour la réalisation d'une série d'usinages dans le centre d'usinage représenté est la suivante.

Une palette (13) équipée d'un diviseur (2) dans le plateau (3) duquel est fixée une pièce (9) à usiner, est amenée sur un chariot (23) de manière automatique ou non.

Comme montré à la figure 5, il est procédé au transfert de la palette (13) et par suite du plateau sur le changeur de palettes (22) du centre d'usinage.

Par rotation du changeur de palettes, la palette considérée est amenée sur la table (20) du centre d'usinage qui est, d'une part, montée pivotante autour d'un axe vertical et, d'autre part, déplaçable selon des directions (X) et (Y).

Après amenée de la palette dans la position représentée à la figure 6 dans laquelle est réalisé l'accouplement entre le plateau diviseur et le moteur (15), il est procédé à l'initialisation du diviseur qui a été préalablement orienté manuellement en dehors du centre.

La table de la machine est alors ramenée par déplacement rapide en position de travail pour se présenter devant l'outil adéquat. Tous les usinages utilisant cette position angulaire sont alors effectués axialement et radialement.

A la fin de cette séquence d'opérations, l'ensemble est ramené en position d'accouplement avec le moteur (15) où est réalisé un nouveau positionnement angulaire du plateau.

Lorsque la totalité des opérations susceptibles d'être réalisées sur ce centre d'usinage ont été effectuées, la palette est déplacée vers le dispositif de transfert (22), en vue de son évacuation, tandis qu'une autre palette a pu être chargée sur ledit dispositif, en vue de la réalisation d'usinages sur la pièce qu'elle porte.

Comme il ressort de ce qui précède, l'invention apporte une grande amélioration à la technique existante en fournissant un plateau diviseur de conception simple, permettant l'usinage dans des conditions très précises d'une pièce, en réduisant considérablement le nombre d'opérations et, par suite, le nombre de montages par rapport à ceux nécessaires avec les moyens traditionnels.

6

## - REVENDICATIONS -

1. - Plateau diviseur destiné à assurer la tenue d'une pièce lors de son usinage, caractérisé en ce qu'il possède une ouverture (7) centrale et axiale permettant le passage de la pièce (9) à usiner et la tenue de celle-ci, l'épaisseur du plateau diviseur et du bâti dans lequel il est monté étant faible vis-à-vis du diamètre de son ouverture.

2. - Plateau diviseur selon la revendication 1, caractérisé en ce que le diamètre de l'ouverture du plateau est sensiblement égal au triple de l'épaisseur de celui-ci.

3. - Plateau diviseur selon l'une quelconque des revendications 1 et 2, caractérisé en ce qu'il porte une pièce (12) en forme de berceau qui, le traversant, est ouverte vers le haut et sert au support de la pièce à usiner.

4. - Plateau diviseur selon l'une quelconque des revendications 1 à 3, caractérisé en ce qu'il est monté à demeure sur une palette (13) de centre d'usinage, équipée de moyens de verrouillage sur la table du centre d'usinage.

5. - Plateau diviseur selon l'une quelconque des revendications 1 à 4, caractérisé en ce que le moteur (5) assurant le positionnement angulaire du plateau diviseur (3) et les moyens de commande de ce positionnement, est solidaire non pas du plateau diviseur, mais du centre d'usinage, des moyens de liaison mécanique (14, 19) étant prévus entre la sortie du moteur (15) et le plateau diviseur (3), et des moyens de déplacement rapide étant prévus, susceptibles d'assurer le transfert de la table du centre d'usinage entre la position d'usinage et la position d'accouplement du plateau diviseur avec le moteur, et inversement.

6. - Plateau diviseur selon la revendication 5, caractérisé en ce que le plateau diviseur (3) est actionné par un moteur pas à pas (15) installé dans l'enceinte de la machine d'usinage et relié par une logique électronique à l'armoire de commande numérique (18) du centre d'usinage.

FIG.1

2

3

10

7

10

9

8

10

FIG.4

17

18

16

y

15    19

x

20

22

2

23

9    14    13

FIG.2

FIG.3

FIG.5

FIG.6

FIG.7

# FIG.8

0107600

Office européen
des brevets

**RAPPORT DE RECHERCHE EUROPEENNE**

Numéro de la demande

EP  83 42 0166

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-C- 365 403  (NAGEL)<br>* En entier * | 1 | B 23 Q    1/02<br>B 23 Q    7/14<br>B 23 Q    1/16 |
| Y | US-A-2 417 132  (SCHREIBER)<br>* Figure 8 * | 1 | |
| Y | FR-A-  695 607  (TAUTANT)<br>* Résumé b * | 1 | |
| A | US-A-2 745 167  (CROSS) | 5 | |
| A | DE-A-2 326 369  (WADKIN) | 5,6 | |
| A | US-A-2 619 710  (OVSHINSKY) | | |
| A | US-A-1 510 811  (WARD) | | DOMAINES TECHNIQUES RECHERCHES (Int. Cl. 3) |
| A | US-A-2 511 930  (MARTENS) | | B 23 Q<br>B 23 F<br>B 23 C |
| A | FR-A-2 439 646  (FRUEHAUF) | | |
| A | GB-A-  843 231  (HEYLIGENSTAEDT) | | |
| | ---                    -/- | | |

Le présent rapport de recherche a été établi pour toutes les revendications

| Lieu de la recherche<br>LA HAYE | Date d'achèvement de la recherche<br>12-01-1984 | Examinateur<br>DE GUSSEM J.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82

0107600

**Office européen des brevets**

**RAPPORT DE RECHERCHE EUROPEENNE**

Numéro de la demande

EP 83 42 0166

| DOCUMENTS CONSIDERES COMME PERTINENTS | | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. 3) | |
| A | GB-A-2 048 131 (RICHARDS) | | | |
| A | GB-A- 518 876 (SCHLOEMANN) | | | |
| | ----- | | DOMAINES TECHNIQUES RECHERCHES (Int. Cl. 3) | |

Le présent rapport de recherche a été établi pour toutes les revendications

| Lieu de la recherche LA HAYE | Date d'achèvement de la recherche 12-01-1984 | Examinateur DE GUSSEM J.L. |
|---|---|---|

OEB Form 1503. 03.82